# FASCICULE DE BREVET EUROPEEN

(11) **EP 0 924 443 B1**
(45) Date de publication et mention de la délivrance du brevet: **25.09.2002**
(21) Numéro de dépôt: 98402882.9
(22) Date de dépôt: 20.11.1998
(51) Int. Cl.: F16D 48/06

(54) **Procédé de reconnaissance de l'état d'embrayage d'un moteur de véhicule**
Verfahren zur Erkennung der Kupplungstellung eines Kraftfahrzeugmotors
Method of recognizing the engine clutch state of a vehicle

(30) Priorité: 25.11.1997 FR 9714801
(43) Date de publication de la demande: 23.06.1999
(73) Titulaire: Renault s.a.s., 92100 Boulogne Billancourt (FR)
(72) Inventeur: Dubois, Philippe, 75015 Paris (FR); Dubos, Gilles, 78000 Versailles (FR); Faivre, Sébastien,, 91300 Massy (FR)
(74) Mandataire: Fernandez, Francis Lionel

(56) Documents cités:
- EP-A- 0 545 749
- WO-A-84/03071
- WO-A-96/25612
- DE-A- 3 129 681
- DE-A- 4 129 784
- DE-A- 19 540 921
- US-A- 4 361 060

## Description

La présente invention concerne un procédé de reconnaissance de l'état d'embrayage ou de débrayage d'un ensemble moteur-boîte de vitesses dans un véhicule automobile, sans contacteur physique monté sur la pédale d'embrayage, réalisé par le calculateur électronique de contrôle moteur du véhicule.

Pour les moteurs à combustion interne, à essence ou Diesel, les stratégies de contrôle moteur concernant notamment la régulation du ralenti et le problème des à-coups de couple sont plus performantes quand elles disposent en temps réel de l'information sur l'embrayage ou le débrayage de la boîte de vitesses avec le moteur, c'est-à-dire sur les instants où les deux disques du dispositif d'embrayage sont solidaires physiquement ou au contraire complètement désolidarisés. Pour une stratégie de contrôle des anti-à-coups de couple, il est intéressant de repérer ces instants afin de filtrer les variations de régime dans l'état embrayé, pour éviter ces à-coups, et de ne pas les filtrer hors embrayage pour obtenir une chute de régime suffisamment rapide lors des changements de vitesse.

Actuellement, l'information sur l'embrayage est généralement fournie par un capteur ou un contacteur monté sur la pédale d'embrayage, qui bascule dès que le pied du conducteur touche la pédale pour l'enfoncer et au moment où le pied est totalement relevé de la pédale. Un des inconvénients de cette solution actuelle est le surcoût lié au prix du contacteur et de son câblage, ainsi qu'à son diagnostic. Un second inconvénient tient au fait que l'instant du débrayage, qui est reconnu dès le posé de pied, est anticipé, tandis que l'instant du ré-embrayage qui est reconnu au levé de pied, est signalé en retard par rapport au réaccouplement mécanique réel de la boîte et du moteur.

Selon une autre solution actuelle, décrite dans la demande de brevet européen EP 545 749 A1, au nom des Automobiles PEUGEOT, la reconnaissance et la prédiction du rapport de boîte engagé sont faites par logiciel. Cette solution ne répond qu'imparfaitement au problème posé, car elle ne permet pas de détecter les instants exacts d'accouplement et de désaccouplement mécaniques de la boîte de vitesses et du moteur, dans tous les cas de figure notamment en cas de trompage de la stratégie par exemple lors d'une forte accélération à vide.

La présente invention a pour but de reconnaître avec précision ces instants exacts d'accouplement et de désaccouplement mécaniques, sans utiliser de capteur physique relié à la pédale d'embrayage du véhicule, ce qui présente l'avantage supplémentaire de constituer une solution moins coûteuse que les solutions antérieures utilisant du matériel.

Pour cela, l'invention est un procédé de reconnaissance de l'embrayage entre le moteur et la boîte de vitesses d'un véhicule automobile, réalisé par un calculateur électronique de contrôle moteur, comprenant une étape de détermination d'un signal V/N représentant le rapport de la vitesse V du véhicule sur le régime N du moteur, caractérisé en ce qu'il comprend de plus les étapes suivantes :
- calcul de la dérivée première dN/dt et de la dérivée seconde d²N/dt² du régime moteur par rapport au temps;
- filtrage du bruit associé aux valeurs des dérivées première et seconde du régime moteur par rapport au temps ;
- détection de la présence du signal V/N représentant le rapport de la vitesse du véhicule sur le régime du moteur dans des fenêtres de rapports de boîte de vitesses, par comparaison de ce signal avec un nombre de seuils égal au nombre de rapports de la boîte de vitesses pour délivrer un signal dit d'embrayage S_{EMB};
- création d'un signal dit de débrayage S_{DEB} par détection d'un changement d'état du signal d'embrayage S_{EMB} traduisant un débrayage de l'ensemble moteur-boîte de vitesses et par détection d'une décélération du régime moteur caractéristique d'un désaccouplement de l'ensemble moteur-boîte de vitesses ;
- création d'un signal binaire S_{E} traduisant l'état d'accouplement de l'ensemble moteur-boîte de vitesses à partir du signal d'embrayage S_{EMB} et du signal de débrayage S_{DEB} ;
- impossibilité d'autoriser une détection d'embrayage de l'ensemble moteur-boîte de vitesses en cas de variations rapides du régime moteur, repérées par analyse des dérivées première et seconde du régime moteur par rapport au temps, pour délivrer un signal binaire S d'embrayage de l'ensemble moteur-boîte de vitesses, exploitable par le calculateur électronique.

D'autres caractéristiques et avantages de l'invention apparaîtront à la lecture de la description suivante d'un exemple de réalisation, illustrée par les figures suivantes qui sont :
- figures 1ₐ et 1_{b} : l'information d'embrayage réelle et délivrée par un contacteur de pédale respectivement ;
- figure 2 : le schéma de principe du procédé de reconnaissance de l'état d'embrayage selon l'invention ;
- figures 3 à 7 : des schémas logiques de réalisation des différentes étapes du procédé, décrites à propos de la figure 2.

Le principe du procédé de reconnaissance de l'embrayage ou du débrayage de la boîte de vitesses avec le moteur consiste à créer un signal représentant le rapport de la vitesse V du véhicule sur le régime N du moteur, et à repérer en temps réel l'entrée de ce signal dans l'une des fenêtres particulières, dont chacune est directement associée à un rapport déterminé de la boîte de vitesses, à la monte pneumatique et à la dispersion des grandeurs d'entrée, que ce signal y entre lors d'un passage à une vitesse supérieure ou inférieure. De plus, pour anticiper le débrayage et détromper le ré-embrayage, le procédé calcule les dérivées première et seconde, par rapport au temps, du régime moteur. Ces fenêtres de repérage sont calibrées expérimentalement à partir d'essais sur véhicule et en tenant compte des dispersions.

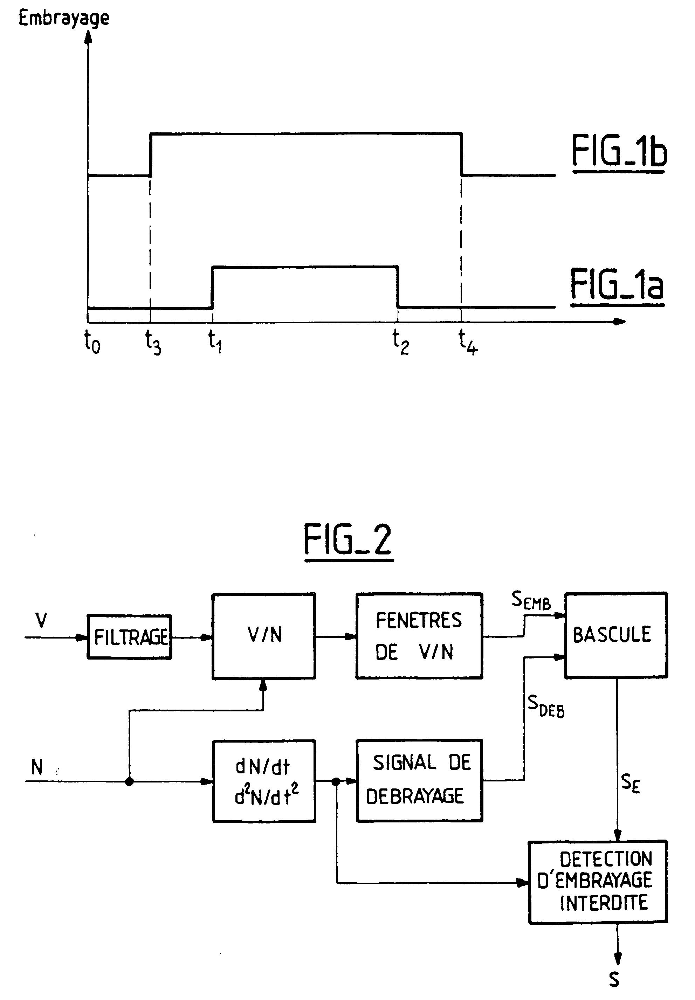

La figure 1ₐ représente le signal d'information réelle de l'état d'embrayage de l'ensemble moteur-boîte de vitesses. Entre les instants t₀ et t₁, l'ensemble est embrayé, entre les instants t₁ et t₂, il est débrayé, puis à partir de l'instant t₂, un réembrayage a lieu.

Si on considère l'information délivrée par un contacteur placé sous la pédale d'embrayage du véhicule, le signal représenté sur la figure 1_{b} montre que l'information délivrée n'est pas identique à l'information réelle sur l'état d'embrayage, car le contacteur bascule à l'instant t₃ dès le posé du pied sur la pédale d'embrayage et donc avant le désaccouplement réel de la boîte et du moteur, par contre il bascule après le réaccouplement, en cas de réembrayage, au moment où le conducteur enlève complètement le pied de la pédale.

En réalité, le désaccouplement mécanique de la boîte et du moteur ne s'effectue que sur une zone d'intérêt de la course de la pédale, étant donné que le frottement entre les deux disques de l'embrayage est fonction de la position de la pédale d'embrayage. L'invention vise à recréer cette information correspondant physiquement à la réalité.

Comme le montre le schéma de principe de la figure 2, une première étape du procédé consiste d'abord à délivrer un signal V/N représentant le rapport de la vitesse V du véhicule sur le régime N du moteur. Simultanément, une autre étape du procédé réalise le calcul de la dérivée première dN/dt et de la dérivée seconde, d²N/dt², du régime par rapport au temps.

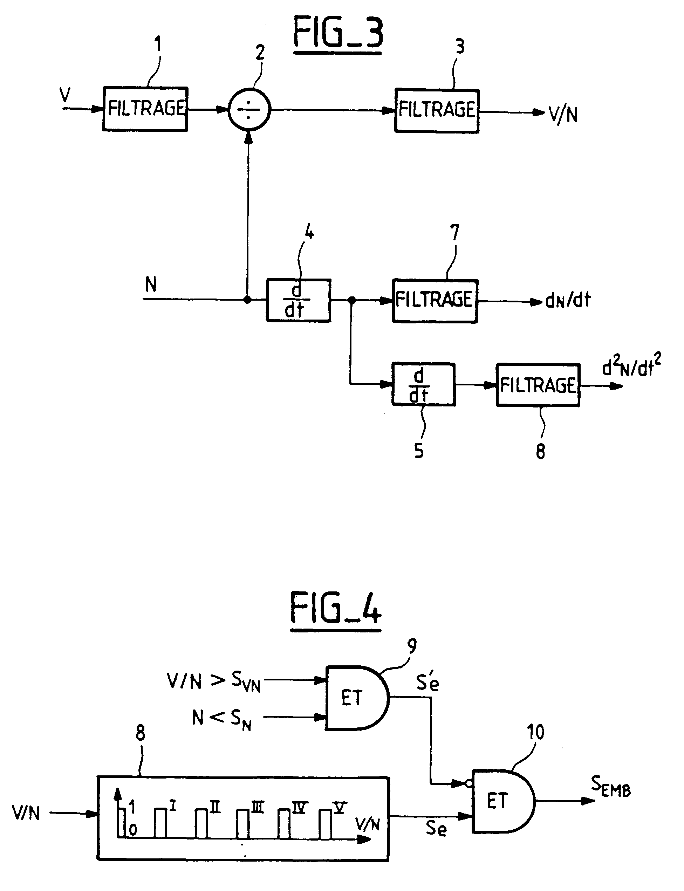

Le schéma logique de la figure 3 montre en détail la mise en oeuvre des étapes précédemment décrites par le calculateur d'injection.
La vitesse véhicule brute V, doit être filtrée tout d'abord pour éliminer le bruit, par un filtrage passe-bas 1 du premier ordre, qui doit tenir compte de la stratégie d'embrayage, mais aussi des autres stratégies initialement présentes utilisant cette variable. Puis elle est divisée par le régime moteur moyen N dans une étape 2, dont le résultat est ensuite filtré à son tour lors d'un filtrage passe-bas 3, suffisamment fort pour réduire le bruit du signal, mais sans créer un retard trop grand.

Le calcul de la dérivée première dN/dt par rapport au temps du régime moteur moyen N est réalisé par exemple par une simple division du régime par la période de récurrence δt de la tâche accomplie par le calculateur lors d'une stratégie, qui est fixe, par exemple égale à 10 ms. La dérivée seconde du régime d²N/dt² est obtenue de la même façon, par une division 5 de la dérivée première N par la période δt.

Ces deux dérivées du régime sont filtrées ensuite chacune par un filtrage passe-bas du premier ordre, référencé 7 et 8, destiné à enlever une partie du bruit, mais rester suffisamment rapide, car ces signaux sont utilisés pour détecter le plus rapidement possible les changements d'état.

Une étape suivante du procédé de reconnaissance, apparaissant sur la figure 2, consiste à détecter la présence du signal V/N dans des fenêtres de rapports de boîte, pour délivrer un signal d'embrayage S_{EMB}. Pour cela, comme cela apparaît sur la figure 4, le signal V/N est comparé à un ensemble 8 de plusieurs seuils qui sont fonction des rapports possibles de la boîte de vitesses. Une fonction logique ET 9 permet d'éviter d'éventuels basculements intempestifs du signal. Les signaux de sortie Sₑ et S'ₑ, obtenus respectivement après comparaison 8 et fonction logique 9, sont combinés par une fonction logique 10 de type ET, qui délivre un signal d'embrayage S_{EMB} non perturbé.

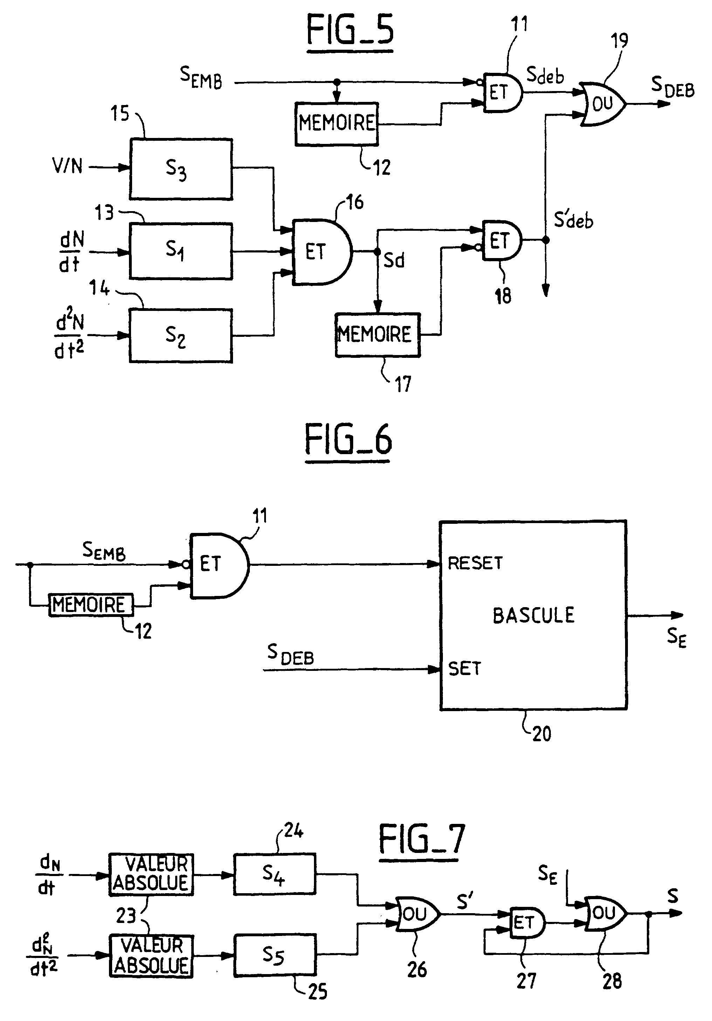

Le procédé consiste également à créer un signal représentatif de l'état de débrayage S_{DEB} (figure 2) de l'ensemble moteur-boîte de vitesses. Un signal de débrayage S_{deb} peut être obtenu à partir d'un front descendant du signal d'embrayage S_{EMB}, qui change d'état quand le conducteur appuie sur la pédale d'embrayage. Pour cela, est réalisée une comparaison logique ET 11 du signal d'embrayage S_{EMB} avec sa valeur précédente, mémorisée dans une cellule mémoire 12, pour repérer son changement d'état (figure 5).

Un signal de débrayage S'_{deb} peut également être obtenu par détection d'une décélération du régime moteur N instantané, obtenue par calibration, très caractéristique du moment où se produit le désaccouplement de l'ensemble moteur-boîte de vitesses. Pour cela, on compare les dérivées première dN/dt et seconde d²N/dt² à des seuils négatifs S₁ et S₂, déterminés par calibration, lors de deux étapes de comparaison 13 et 14 respectivement.

Si la stratégie de contrôle reconnaît l'état embrayé quand le véhiculé ne roule pas, ce qui correspond à un seuil minimal S₃ déterminé du signal V/N, le signal de débrayage ne doit pas être obtenu par cette détection de décélération du régime, ceci pour éviter éventuellement des sautes de régime intempestives au point mort et pouvoir repérer une nouvelle phase de départ du véhicule, c'est-à-dire un nouvel embrayage sachant que les actions sur la pédale d'embrayage, notamment pour débrayer, ne peuvent pas être détectées à l'arrêt, quand la vitesse du véhicule est nulle et le régime constant. A cet effet, le signal V/N obtenu est comparé au seuil S₃, lors d'une étape de comparaison 15. Les résultats des trois comparaisons 13, 14 et 15 sont ajoutés lors d'une addition logique ET 16, qui délivre un signal S_{d}. Sa valeur instantanée est ensuite comparée à sa valeur précédente, mémorisée dans une cellule mémoire 17, lors d'une comparaison logique ET 18 dont le signal de sortie est le signal de débrayage S'_{deb}. Une fonction logique OU 19 délivre le signal de débrayage S_{DEB}, obtenu par combinaison de deux précédents signaux S_{deb} et S_{deb'}.

Cette seconde méthode d'obtention du signal de débrayage permet d'anticiper la plupart des débrayages classiques par rapport à la première méthode, car le signal représentatif du régime N ne subit aucun filtrage, contrairement au signal V/N. Grâce à cette méthode, il est possible d'anticiper le débrayage jusqu'à 200 ms, sachant qu'un débrayage rapide dure 500 ms à 2 secondes environ.

Ces deux signaux d'embrayage S_{EMB} et de débrayage S_{DEB} vont être utilisés pour créer le signal exploitable par les calculateurs électroniques de contrôle, dans le véhicule, et délivrant l'information sur l'état d'embrayage de l'ensemble moteur-boîte de vitesse. Pour cela, les signaux S_{EMB} et S_{DEB} entrent dans une bascule logique 20 (figure 6), dont le signal binaire de sortie S_{E} est égal à 1, s'il était égal à 0 au calcul précédent et si un front montant est observé sur le signal d'embrayage S_{EMB} par la mémoire 12 et la porte logique 11 décrite à propos de la figure 5.

Par contre, ce signal S_{E} passe à 0 s'il était à 1 au calcul précédent avec un front montant observé sur le signal de débrayage S_{DEB}.

Selon une caractéristique essentielle de l'invention, le procédé comporte une étape supplémentaire d'interdiction de reconnaissance de l'état embrayé si le régime moteur varie trop rapidement (figure 2). Pour cela, le procédé effectue une étape 23 de calcul de la valeur absolue de la dérivée première et de la dérivée seconde du régime, puis de comparaison 24 et 25 à des seuils S₄ et S₅ respectivement aboutissant aux deux signaux respectifs s₄ et s₅. Les deux seuils S₄ et S₅ sont calibrés à partir des accélérations et décélérations maximales du régime en condition normalement embrayé, ce qui correspond à une pleine charge sur le premier rapport de la boîte de vitesse et à un freinage violent sur ce même rapport, sachant qu'ils doivent être obligatoirement inférieurs à ceux pris pour détecter le débrayage (figure 7). Ces deux signaux s₄ et s₅ sont combinés dans une porte logique OU 26 dont le signal de sortie S' va être combiné à son tour au signal d'embrayage S_{E}, délivré par la bascule 20, dans une porte OU 28. Lorsque la pédale d'embrayage est enfoncée, il ne faut pas que le signal de sortie S' de la porte logique OU 26 interfère. Ce signal S' est alors inhibé par le rebouclage du signal de sortie S à travers une porte logique ET 27, qui va forcer un état 0 en entrée de la porte OU 28, quel que soit l'état de sortie de la porte OU 26. Lorsque l'ensemble moteur-boîte de vitesses est débrayé, le signal de sortie S est égal à 1, donc la porte logique ET 27 est transparente pour la sortie de la porte OU 26. Le passage du signal S à 0 se fera au plus tard des deux basculements du signal S₇ ou de la sortie de la porte OU 26 à 0.

## Revendications

1. Procédé de reconnaissance de l'embrayage entre un moteur de véhicule automobile et la boîte de vitesses, réalisé par un calculateur électronique de contrôle moteur, comprenant une étape de détermination d'un signal (V/N) représentant le rapport de la vitesse (V) du véhicule sur le régime (N) du moteur, **caractérisé en ce qu'**il comprend de plus les étapes suivantes :
- calcul de la dérivée première (dN/dt) et de la dérivée seconde (d²N/dt²) du régime moteur N par rapport au temps ;
- filtrage du bruit associé aux valeurs des dérivées première et seconde du régime moteur N par rapport au temps ;
- détection de la présence du signal (V/N) représentant le rapport de la vitesse du véhicule sur le régime du moteur dans des fenêtres de rapports de boîte de vitesses, par comparaison de ce signal avec un nombre de seuils égal au nombre de rapports de la boîte de vitesses pour délivrer un signal dit d'embrayage (S_{EMB}) ;
- création d'un signal dit de débrayage (S_{DEB}) par détection d'un changement d'état du signal d'embrayage (S_{EMB}) traduisant un débrayage de l'ensemble moteur-boîte de vitesses et par détection d'une décélération du régime moteur (N) caractéristique d'un désaccouplement de l'ensemble moteur-boîte de vitesses ;
- création d'un signal binaire (S_{E}) traduisant l'état d'accouplement de l'ensemble moteur-boîte de vitesses à partir du signal d'embrayage (S_{EMB}) et du signal de débrayage (S_{DEB}) ;
- impossibilité d'autoriser une détection d'embrayage de l'ensemble moteur-boîte de vitesses en cas de variations rapides du régime moteur (N), repérées par analyse des dérivées première (dN/dt) et seconde (d²N/dt²) du régime moteur par rapport au temps, pour délivrer un signal binaire (S) d'embrayage de l'ensemble moteur-boîte de vitesses, exploitable par le calculateur électronique.

2. Procédé de reconnaissance de l'embrayage selon la revendication 1, **caractérisé en ce que** le calcul de la dérivée première (dN/dt) du régime moteur (N) par rapport au temps est réalisé par division du régime par la période de récurrence de la tâche accomplie par le calculateur électronique lors d'une stratégie de contrôle moteur, et **en ce que** le calcul de la dérivée seconde (d²N/dt²) par rapport au temps est réalisé par division de sa dérivée première (dN/dt) par la même période de récurrence.

3. Procédé de reconnaissance de l'embrayage selon la revendication 1, **caractérisée en ce que** le filtrage des dérivées première (dN/dt) et seconde (d²N/dt²) est de type passe-bas du premier ordre.

4. Procédé de reconnaissance de l'embrayage selon la revendication 1, **caractérisée en ce que**, pour éviter des basculements intempestifs du signal d'embrayage en phase de ralenti du moteur, une fonction logique (ET) combine la valeur du régime moteur (N), quand elle est inférieure à un seuil maximal déterminé (S_{N}) avec la valeur du signal (V/N) quand elle est supérieure à un seuil (S_{VN}) déterminé correspondant au débrayage de l'ensemble moteur-boîte de vitesses en phase de roulage du véhicule, et délivre un signal (S'ₑ) qui est ensuite combiné, par une fonction logique (ET), avec le signal (Sₑ), obtenu par comparaison du signal (V/N) avec un ensemble de seuils correspondant aux rapports de la boîte de vitesses, pour délivrer un signal d'embrayage (S_{EMB}) non perturbé.

5. Procédé de reconnaissance de l'embrayage selon la revendication 1, **caractérisé en ce que** la détection d'une décélération du régime moteur (N) est obtenue par comparaison des dérivées première (dN/dt) et seconde (d²N/dt²) du régime moteur (N) par rapport au temps avec des seuils négatifs (S₁) et (S₂) respectivement, déterminés par calibration.

6. Procédé de reconnaissance de l'embrayage selon les revendications 1 et 5, **caractérisé en ce que**, dans le cas d'une stratégie de contrôle moteur reconnaissant l'état embrayé de l'ensemble moteur-boite de vitesses à l'arrêt du véhicule, il comporte une étape d'inhibition de la détection d'une décélération du régime moteur pour créer un signal d'embrayage, par comparaison du signal (V/N) avec un seuil (S₃) minimal correspondant à l'arrêt du véhicule, suivie d'une addition logique (ET) des résultats des trois précédentes comparaisons avec les seuils (S₁, S₂ et S₃) qui délivre un signal (S_{d}) qui est ensuite comparé à sa valeur précédente mémorisée, pour délivrer un signal de débrayage (S'_{deb}).

7. Procédé de reconnaissance de l'embrayage selon la revendication 1, **caractérisé en ce que** la détection d'un changement d'état du signal d'embrayage (S_{EMB}), quand la pédale d'embrayage est enfoncée, est réalisée par une comparaison logique (ET) dudit signal d'embrayage (S_{EMB}) avec sa valeur précédente mémorisée, qui délivre un signal de débrayage (S_{deb}).

8. Procédé de reconnaissance de l'embrayage selon les revendications 5, 6 et 7, **caractérisé en ce que** les deux signaux de débrayage (S_{deb}) issu de la détection d'un changement d'état du signal d'embrayage (S_{EMB}) d'une part, et (S'_{deb}) issu de la détection d'une décélération du régime moteur d'autre part sont combinés dans une fonction logique (OU) qui délivre un signal de débrayage (S_{DEB}).

9. Procédé de reconnaissance de l'embrayage selon la revendication 1, **caractérisé en ce que** l'étape d'interdiction d'autoriser une détection d'embrayage de l'ensemble moteur-boîte de vitesses, en cas de variations rapides du régime moteur (N), est réalisée par :
- calcul de la valeur absolue des dérivées première (dN/dt) et seconde (d²N/dt²) du régime par rapport au temps ;
- comparaison de ces valeurs absolues obtenues avec des seuils (S₄) et (S₅) respectivement, calibrés à partir des accélérations et des décélérations maximales du régime en condition normalement embrayé ;
- combinaison des deux signaux (s₄ et s₅) obtenus à partir de la comparaison précédente dans une fonction logique (OU) délivrant un signal de sortie (S') ;
- combinaison dudit signal de sortie (S') avec le signal binaire (S_{E}), traduisant l'état d'accouplement de l'ensemble moteur-boîte de vitesses, dans une fonction logique (OU) pour délivrer un signal binaire (S) d'embrayage exploitable par le calculateur électronique ;
- inhibition du signal de sortie (S') quand la pédale d'embrayage est enfoncée, par combinaison dans une fonction logique (ET) dudit signal (S') avec le signal binaire (S) d'embrayage.

## Claims

1. Method of recognition of engagement of the clutch between an engine of an automotive vehicle and the gearbox, performed by an electronic engine control computer, comprising a step of determining a signal (V/N) representing the ratio of the speed (V) of the vehicle to the engine speed (N), **characterised in that** it further comprises the following steps:
- calculation of the first derivative (dN/dt) and the second derivative (d²N/dt²) of the engine speed N with respect to time;
- filtering of the noise associated with the values of the first and second derivatives of the engine speed N with respect to time;
- detection of the presence of the signal (V/N) representing the ratio of the vehicle speed to the engine speed, in windows of gearbox ratios, by comparison of said signal with a number of thresholds equal to the number of ratios of the gearbox in order to deliver a so-called clutch engaged signal (S_{EMB});
- creation of a so-called clutch disengaged signal (S_{DEB}) by detection of a change in the state of the clutch engaged signal (S_{EMB}), translating the disengagement of the clutch of the engine-gearbox assembly by detection of deceleration of the engine speed (N) characteristic of de-coupling the engine-gearbox assembly;
- creation of a binary signal (S_{E}), translating the state of de-coupling of the engine-gearbox assembly from the clutch engaged signal (S_{EMB}) and the clutch disengaged signal (S_{DEB});
- impossibility of allowing detection of engagement of the clutch of the engine-gearbox assembly in the case of rapid variations in the engine speed (N), determined by analysis of the first derivative (dN/dt) and second derivative (d²N/dt²) of the engine speed with respect to time, in order to deliver a binary signal (S)of clutch engagement of the engine-gearbox assembly, that can be employed by the electronic computer.

2. Method of recognition of engagement of the clutch according to claim 1, **characterised in that** calculation of the first derivative (dN/dt) of the engine speed (N) with respect to time is done by division of the speed by the period of recurrence of the task accomplished by the electronic computer during an engine control strategy, and **in that** calculation of the second derivative (d²N/dt²) with respect to time is done by division of its first derivative (dN/dt) by the same period of recurrence.

3. Method of recognition of engagement of the clutch according to claim 1, **characterised in that** the filtering of the first derivative (dN/dt) and second derivative (d²N/dt²) is of the first order low pass type.

4. Method of recognition of engagement of the clutch according to claim 1, **characterised in that** in order to avoid untimely triggering of the clutch engaged signal in the slowing down phase of the engine, a logical function (ET) combines the value of the engine speed (N) when it is less than an established maximum threshold (S_{N}) with the value of the signal (V/N) when it is greater than an established threshold (S_{VN}) corresponding to the disengagement of the clutch of the engine-gear box assembly in the travelling phase of the vehicle, and delivers a signal (S'ₑ) that is then combined using a logical function (ET) with the signal (Sₑ) obtained by comparison of the signal (V/N) with a set of thresholds corresponding to the gearbox ratios in order to deliver an undisturbed clutch engaged signal (S_{EMB}).

5. Method of recognition of engagement of the clutch according to claim 1, **characterised in that** the detection of deceleration of the engine speed (N) is obtained by comparison of the first derivative (dN/dt) and second derivative (d²N/dt²) of the engine speed (N) with respect to time with negative thresholds (S₁) and (S₂) respectively, determined by calibration.

6. Method of recognition of engagement of the clutch according to claims 1 and 5, **characterised in that** in the case of an engine control strategy recognising the clutch engaged state of the engine-gearbox assembly when the vehicle is halted, it comprises a step of inhibiting detection of deceleration of the engine speed (N) in order to create a clutch engaged signal, by comparison of the signal (V/N) with a minimum threshold (S₃) corresponding to the halting of the vehicle, followed by logical addition (ET) of the results of the three preceding comparisons with the thresholds (S₁, S₂ and S₃) that deliver a signal (S_{d}) that is then compared to its previous, stored, value in order to deliver a clutch disengaged signal (S'_{deb}).

7. Method of recognition of engagement of the clutch according to claim 1, **characterised in that** the detection of a change in the state of the clutch engaged signal (S_{EMB}), when the clutch pedal is depressed, is done by logical comparison (ET) of said clutch engaged signal (S_{EMB}) with its previous, stored, value, that delivers a clutch disengaged signal (S_{deb}).

8. Method of recognition of engagement of the clutch according to claims 5, 6 and 7, **characterised in that** the two clutch disengaged signals (S_{deb}) resulting from detection of a change in the state of the clutch engaged signal (S_{EMB}) on the one hand, and (S'_{deb}) resulting from the detection of deceleration of the engine speed on the other hand, are combined in a logic function (OU) that delivers a clutch disengaged signal (S_{DEB}).

9. Method of recognition of engagement of the clutch according to claim 1, **characterised in that** the step of preventing authorisation of detection of engagement of the clutch of the engine-gearbox assembly, in the case of rapid variations in the engine speed (N) is done by:
- calculating the absolute value of the first derivative (dN/dt) and second derivative (d²N/dt²) of the engine speed with respect to time;
- comparison of these absolute values obtained with thresholds (S₄) and (S₅) respectively, calibrated from the maximum accelerations and decelerations of the engine speed in the state where the clutch is normally engaged;
- combination of the two signals (s₄ and s₅) obtained from the preceding comparison into a logical function (OU) delivering an output signal (S');
- combination of said output signal (S') with the binary signal (S_{E}) translating the state of coupling of the engine-gearbox assembly into a logical function (OU) in order to deliver a binary clutch engaged signal (S) that can be employed by the electronic computer;
- inhibiting the output signal (S') when the clutch pedal is depressed, by combination, into a logical function (ET), of said signal (S') with the binary clutch engaged signal (S).

## Patentansprüche

1. Verfahren zur Erkennung der Einkupplung zwischen einem Motor eines Kraftfahrzeugs und dem Getriebe, ausgeführt durch einen elektronischen Rechner zur Motorsteuerung, umfassend einen Schritt zur Bestimmung eines Signals (V/N), das das Verhältnis der Geschwindigkeit (V) des Fahrzeugs zur Drehzahl (N) des Motors darstellt, **dadurch gekennzeichnet, dass** es darüber hinaus die folgenden Schritte umfasst:
- Berechnung der ersten Ableitung (dN/dt) und der zweiten Ableitung (d²N/dt²) der Motordrehzahl (N) nach der Zeit;
- Filterung des Rauschens, das mit den Werten der ersten und zweiten Ableitung der Motordrehzahl (N) nach der Zeit verbunden ist;
- Ermittlung des Vorhandenseins des Signals (V/N), das das Verhältnis der Geschwindigkeit des Fahrzeugs zur Motordrehzahl darstellt, in Fenstern der Getriebestufen, durch Vergleich dieses Signals mit einer Anzahl von Schwellenwerten, die gleich ist der Anzahl der Stufen des Getriebes, um ein sogenanntes Einkupplungssignal (S_{EMB}) zu liefem;
- Erzeugung eines sogenannten Auskupplungssignals (S_{DEB}) durch Ermittlung einer Zustandsveränderung des Einkupplungssignals (S_{EMB}), das eine Auskupplung der Einheit Motor-Getriebe wiedergibt, und durch Ermittlung einer Verlangsamung der Motordrehzahl (N), die charakteristisch ist für eine Entkoppelung der Einheit Motor-Getriebe;
- Erzeugung eines binären Signals (S_{E}), das den Koppelungszustand der Einheit Motor-Getriebe ausgehend vom Einkupplungssignal (S_{EMB}) und vom Auskupplungssignal (S_{DEB}) wiedergibt;
- Unmöglichkeit, eine Ermittlung der Einkupplung der Einheit Motor-Getriebe im Fall von raschen Schwankungen der Motordrehzahl (N) zuzulassen, die durch Analyse der ersten (dN/dt) und zweiten (d²N/dt²) Ableitung der Motordrehzahl nach der Zeit festgestellt wurden, um ein binäres Signal (S) der Einkupplung der Einheit Motor-Getriebe zu liefern, das vom elektronischen Rechner verwertet werden kann.

2. Verfahren zur Erkennung der Einkupplung nach Anspruch 1, **dadurch gekennzeichnet, dass** die Berechnung der ersten Ableitung (dN/dt) der Motordrehzahl (N) nach der Zeit durch Division der Drehzahl durch die Wiederkehrperiode der vom elektronischen Rechner bei einer Motorsteuerungsstrategie ausgeführten Aufgabe ausgeführt wird und dass die Berechnung der zweiten Ableitung (d²N/dt²) nach der Zeit durch eine Division ihrer ersten Ableitung (dN/dt) durch die gleiche Wiederkehrperiode ausgeführt wird.

3. Verfahren zur Erkennung der Einkupplung nach Anspruch 1, **dadurch gekennzeichnet, dass** die Filterung der ersten (dN/dt) und zweiten (d²N/dt²) Ableitung vom Typ Tiefpass erster Ordnung ist.

4. Verfahren zur Erkennung der Einkupplung nach Anspruch 1, **dadurch gekennzeichnet, dass** zur Vermeidung von unangebrachten Kippbewegungen des Einkupplungssignals in der Phase der Verlangsamung des Motors eine Logikfunktion (UND) den Wert der Motordrehzahl (N), wenn er niedriger ist als ein bestimmter Mindestschwellenwert (S_{N}), mit dem Wert des Signals (V/N) kombiniert, wenn er höher ist als ein bestimmter Schwellenwert (S_{VN}), der der Auskupplung der Einheit Motor-Getriebe in der Fahrphase des Fahrzeugs entspricht, und ein Signal (S'ₑ) liefert, das anschließend durch eine Logikfunktion (UND) mit dem Signal (Sₑ) kombiniert wird, das durch Vergleich des Signals (V/N) mit einer Gesamtheit von Schwellenwerten erzielt wird, die den Stufen des Getriebes entsprechen, um ein nicht gestörtes Einkupplungssignal (S_{EMB}) zu liefern.

5. Verfahren zur Erkennung der Einkupplung nach Anspruch 1, **dadurch gekennzeichnet, dass** die Ermittlung einer Verlangsamung der Motordrehzahl (N) erzielt wird durch Vergleich der ersten (dN/dt) und zweiten (d²N/dt²) Ableitung der Motordrehzahl (N) nach der Zeit mit negativen Schwellenwerten (S₁) bzw. (S₂), die durch Kalibration bestimmt werden.

6. Verfahren zur Erkennung der Einkupplung nach Anspruch 1 und 5, **dadurch gekennzeichnet, dass** es im Fall einer Motorsteuerungsstrategie, die den eingekuppelten Zustand der Einheit Motor-Getriebe bei Stillstand des Fahrzeugs erkennt, einen Schritt zur Hemmung der Ermittlung einer Verlangsamung der Motordrehzahl umfasst, um ein Einkupplungssignal zu erzeugen, und zwar durch Vergleich des Signals (V/N) mit einem Mindestschwellenwert (S₃), der dem Stillstand des Fahrzeugs entspricht, gefolgt von einer logischen Addition (UND) der Resultate der drei vorhergehenden Vergleiche mit den Schwellenwerten (S₁, S₂ und S₃), die ein Signal (S_{d}) liefert, das anschließend mit seinem vorherigen, gespeicherten Wert verglichen wird, um ein Auskupplungssignal (S'_{deb}) zu liefern.

7. Verfahren zur Erkennung der Einkupplung nach Anspruch 1, **dadurch gekennzeichnet, dass** die Ermittlung einer Zustandsveränderung des Einkupplungssignals (S_{EMB}), wenn das Kupplungspedal niedergedrückt ist, durch einen logischen Vergleich (UND) dieses Einkupplungssignals (S_{EMB}) mit seinem vorherigen, gespeicherten Wert ausgeführt wird, der ein Auskupplungssignal (S_{deb}) liefert.

8. Verfahren zur Erkennung der Einkupplung nach den Ansprüchen 5, 6 und 7, **dadurch gekennzeichnet, dass** die zwei Signale, einerseits das Auskupplungssignal (S_{deb}), das hervorgegangen ist aus der Erkennung einer Zustandsveränderung des Einkupplungssignal (S_{EMB}), und andererseits (S'_{deb}), das hervorgegangen ist aus der Ermittlung einer Verlangsamung der Motordrehzahl, in einer Logikfunktion (ODER) kombiniert werden, die ein Auskupplungssignal (S_{DEB}) liefert.

9. Verfahren zur Erkennung der Einkupplung nach Anspruch 1, **dadurch gekennzeichnet, dass** der Schritt des Verbots, eine Ermittlung der Einkupplung der Einheit Motor-Getriebe im Fall von raschen Schwankungen der Motordrehzahl (N) zuzulassen, ausgeführt wird durch:
- Berechnung des absoluten Werts der ersten (dN/dt) und zweiten (d²N/dt^{z}) Ableitung der Drehzahl nach der Zeit;
- Vergleich dieser erzielten absoluten Werte mit Schwellenwerten (S₄) bzw. (S₅), die ausgehend von den maximalen Beschleunigungen und Verlangsamungen der Drehzahl in normal eingekuppeltem Zustand kalibriert werden;
- Kombination der zwei Signale (s₄ und s₅), die ausgehend vom vorherigen Vergleich erzielt wurden, in einer Logikfunktion (ODER), die ein Ausgangssignal (S') liefert;
- Kombination des Ausgangssignals (S') mit dem binären Signal (S_{E}), das den Koppelungszustand der Einheit Motor-Getriebe wiedergibt, in einer Logikfunktion (ODER), um ein binäres Einkupplungssignal (S) zu liefern, das vom elektronischen Rechner verwertet werden kann;
- Hemmung des Ausgangssignals (S'), wenn das Kupplungspedal niedergedrückt ist, durch Kombination des Signals (S') mit dem binären Einkupplungssignal (S) in einer Logikfunktion (UND).
